Europäisches Patentamt

European Patent Office

Office européen des brevets

(19)

(11) Publication number: **0 106 595**
**B1**

(12) # EUROPEAN PATENT SPECIFICATION

(45) Date of publication of patent specification: **19.07.89**

(21) Application number: **83305856.3**

(22) Date of filing: **28.09.83**

(60) Divisional applications 86107372, 86107373, 86107370 filed on 30.05.86, divisional application 87200857 filed on 09.05.87.

(51) Int. Cl.⁴: **B 23 P 23/00,** B 23 Q 1/00, H 02 K 1/06, H 02 K 7/10, H 02 K 37/00, H 02 K 49/00, H 02 P 5/16

(54) Multi-function machine tooling.

(30) Priority: **28.09.82 US 426188**

(43) Date of publication of application:
**25.04.84 Bulletin 84/17**

(45) Publication of the grant of the patent:
**19.07.89 Bulletin 89/29**

(84) Designated Contracting States:
**AT BE CH DE FR GB IT LI LU NL SE**

(56) References cited:
AT-B- 24 269
DE-A-1 452 171
DE-A-1 600 236
DE-A-2 165 723
DE-A-2 834 740
DE-B-2 451 718
DE-C- 599 574
FR-A-2 399 754
FR-A-2 424 095
GB-A- 936 621
GB-A-1 196 526
US-A-3 195 331
US-A-3 381 348
US-A-3 684 907

(73) Proprietor: **Yang, Tai-Her**
**5-1 Tay Pyng St.**
**Shi Hwu Jenn Jang Huah Shiann (TW)**

(72) Inventor: **Yang, Tai-Her**
**5-1 Tay Pyng St.**
**Shi Hwu Jenn Jang Huah Shiann (TW)**

(74) Representative: **Arthur, Bryan Edward et al**
**Withers & Rogers 4 Dyer's Buildings Holborn**
**London EC1N 2JT (GB)**

(56) References cited:
IBM TECHNICAL DISCLOSURE BULLETTIN, vol.25, no. 2, July 1982, New York I.E. BATESON: "Servo Drive with Variable Reference" page 505

SIEMENS COMPONENTS, vol.21, Heft 1, 1983, Berlin und München JUERGEN SCHMIDT: "Motorsteuerung und A/D-Wandlung mit den Mikrocomputern SDA 2010 und SDA 2020" pages 6-9

SIEMENS SCHALTBEISPIELE, Ausgabe 1980/81 SIEMENS AG, München pages 6, 156, 157

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to Multi-Function Machine Tooling and in particular to a Tunnel Type or Dragon-Gate Type Processing System Assembled with Selected Elements and Its Related Interface Means.

Simplicity, standardization, and specifications are the basic pre-requisites in mass productions of industrial products; however, the main mechanical processing machine in the automatic processing system has to be individually designed so as to meet the requirements of different working pieces and different processing courses; therefore, its standardization and specifications are rather difficult to meet. Further, in cases where the working piece or the processing course has major changes, its flexibility is also less adaptable, especially, for the processing system of a large working piece. In order to eliminate the aforesaid drawbacks, the inventor has developed a dragon-gate type machine tool according to claim 1, with a completely innovative idea in terms of design, so as to make said machine tool multi-functional, such as lathe cutting, drilling, planing, milling, abrading, and boring; moreover, this invention may be arranged in a "Group" type structure for series and flow-chart sequence processing, or for combined or paralleled-type processing simultaneously. By means of the newly developed tool-automatic exchange method described in divisional application EP—A—00208125 the tool chest, the circulating working table and other interface means which are collectively controlled by a small computer, a tunnel-type mechanical processing system is established. In the said processing system, the elements to be included in the "Group" type structure may be selected dependent upon the processing course and the requirements of the working piece.

Since the mechanical hardware and the elements in the said "Group" type structure are all assembly and dis-assembly elements, a person who knows little about the inner mechanical structure in the production flow-chart system can still pick up or select the elements to assemble a given "Group" structure. Owing to the assembly and disassembly features of the elements in the said system, it may be manufactured by mass production methods under a given standard and specifications. In addition, any change in the processing power and sequence may be accomplished by changing the software instructions, or by a minor change in the hardware portion, so as to change the mechanical processing system from a specialized nature to a general nature for the purpose of breaking thru the difficulty of the inability to conduct economical mass production because a working piece is of a small quantity but has multiple models.

Detailed description:

Generally, the dragon-gate type machine tools may be classified according to their functions as follows:

(1) Planing machine and milling machine.
(2) Drilling machine.
(3) Grinding machine.
(4) Vertical lathe.
(5) Copying lathe.

In accordance with the structure, they may be classified as follows:

(1) One-sided vertical column type.
(2) Two-sided vertical column type.
(3) Multi-sided vertical column type.

In accordance with the method of driving during processing, they may be classified as follows:

(1) Dragon-gate motion type.
(2) Working table reciprocating motion type.
(3) Working table rotary motion type.
(4) A combination working table reciprocating and rotary motion type.
(5) A type in which the working piece to be processed is placed on the ground.

In accordance with the lathe mandrel, they may be classified as follows:

(1) Single mandrel type.
(2) Multi-mandrel type.

There are other types which can perform several functions in the mechanical processing system; in assembly and exchange natures, and their function versatility is also limited by their structure; for instance, the vertical lathe cannot be used for planing or milling processing, and the dragon-gate type milling lathe cannot perform the cutting processing. Moreover, the exchangeability between structures is rather low; therefore, in the conventional dragon-gate mechanical processing system, the adjustment flexibility of the processing course and the ability to meet the requirements of various processing working pieces is very limited. The structures of their invention which are specifically designed to eliminate the aforesaid drawbacks and are described in detail as follows.

Brief description of the drawings:

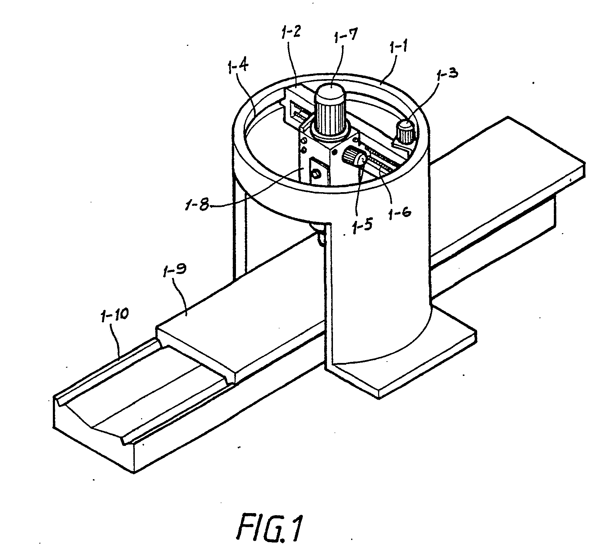

Fig. 1 shows the structure view of a set of rotatively driving displacement lateral girder on the top of the dragon gate, in which are shown.

1-1　The ring shaped top of the dragon gate structure.
1-2　A rotary driven lateral girder.
1-3　Lateral girder driving motor.
1-4　Ring-shaped guide channel.
1-5　Laterally driving motor for tool post.
1-6　Laterally driving guide screw for tool post.
1-7　Mandrel driving motor.
1-8　Tool post.
1-9　Working table.
1-10　Lathe bed.

Fig. 2 shows a view of partial circle sliding surface.

2-1　A dragon gate structure having partial annular sliding surface.
2-2　Bevel gear.
2-3　Driving motor.
2-4　The prime driving gear.

Fig. 3 shows the lathe cutting function.

3-1　Ring-shaped top of the dragon gate structure.

3-2 Rotary driven lateral girder.

3-3 Tool post.

3-4 Working table.

Fig. 4 shows the planing and milling functions.

4-1 Ring-shaped top of the dragon gate structure.

4-2 Rotary driven lateral girder.

4-3 Tool post.

4-4 Working table.

Fig. 5 shows a view of multi-ring lateral girders and working tables.

5-1 Ring-shaped top of the dragon gate structure.

5-2 Rotary driven lateral girder.

5-3 Tool post.

5-4 Working table.

5-5 Working table.

5-6 Conveying belt.

Fig. 6 shows a symmetrical and synchronous balance tool post structure.

6-1 Ring-shaped top of the dragon gate structure.

6-2 Tool post.

6-3 Laterally driving guide screw for tool post.

6-4 Rotary driven lateral girder.

Fig. 7 shows a symmetrical and synchronous balance block structure.

7-1 Ring-shaped top of the dragon gate structure.

7-2 Tool post.

7-3 The laterally driving guide screw of tool post or balance block

7-4 Rotary driven lateral girder.

7-5 Balance block.

Fig. 8 shows a rotary lateral girder driven with motor and power conveying.

8-1 The fixed seat of driving motor.

8-2 Rotary driven lateral girder.

8-3 Rotary driving motor.

8-4 External fixing ring structure.

8-5 Bearing.

8-6 Conductive disk.

8-7 Conductive brush.

Fig. 9 shows the rotary lateral girder being provided with a supporting arm.

9-1 The ring-shaped top of the dragon gate structure.

9-2 Rotary driven lateral girder.

9-3 Driving motor of rotary girder.

9-4 Ring-shaped guide channel.

9-5 The laterally driving motor for tool post.

9-6 The laterally driving guide screw for tool post.

9-7 Mandrel driving motor.

9-8 Tool post.

9-9 Working table.

9-10 Lathe bed.

9-11 Auxiliary arm.

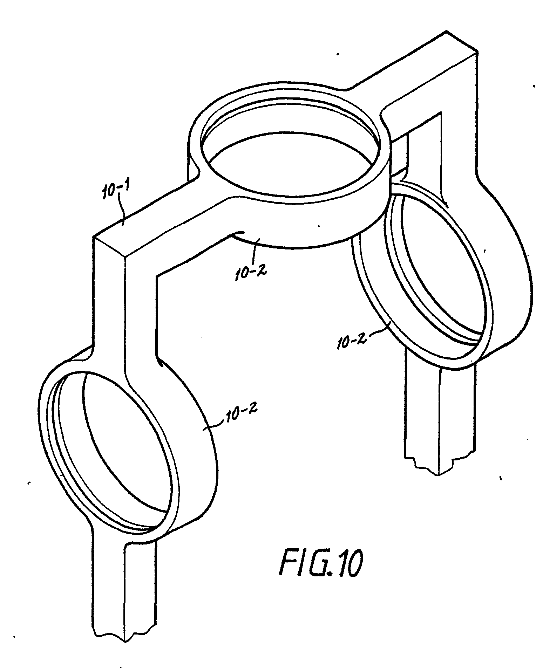

Fig. 10 shows the positions at two sides and on the top for installing rotary lateral girder.

10-1 The top of the dragon gate.

10-2 A ring-shaped structure for coupling the rotary driven lateral girder.

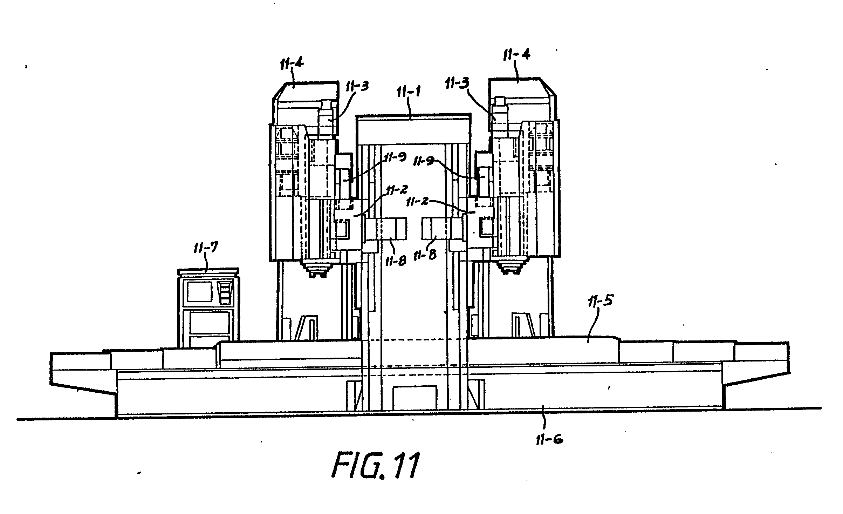

Fig. 11 shows a dragon gate structure provided with lateral girders and tool post at both sides.

11-1 The top of the dragon gate.

11-2 Lateral girder.

11-3 Mandrel driving motor.

11-4 Spindle tool post.

11-5 Working table.

11-6 Lathe bed.

11-7 Power control box.

11-8 Driving motor for lateral girder moving up and down.

11-9 Lateral driving motor for mandrel tool post.

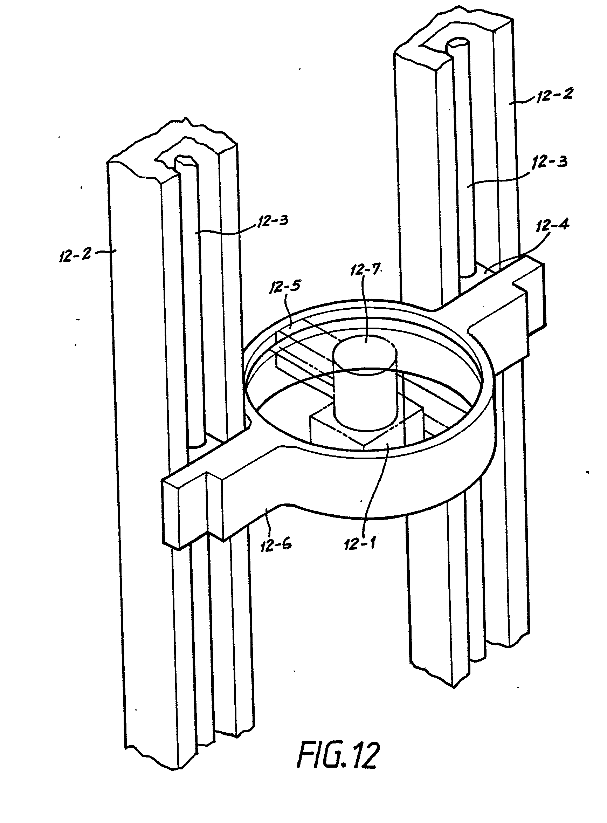

Fig. 12 shows a rotary driven lateral girder in the main lateral girder.

12-1 Tool post.

12-2 The column of the dragon gate.

12-3 The driving guide screw for the ring-shaped lateral girder moving up and down.

12-4 Joint block.

12-5 The rotary driven lateral girder.

12-6 Ring-shaped lateral girder.

12-7 Mandrel Driving Motor

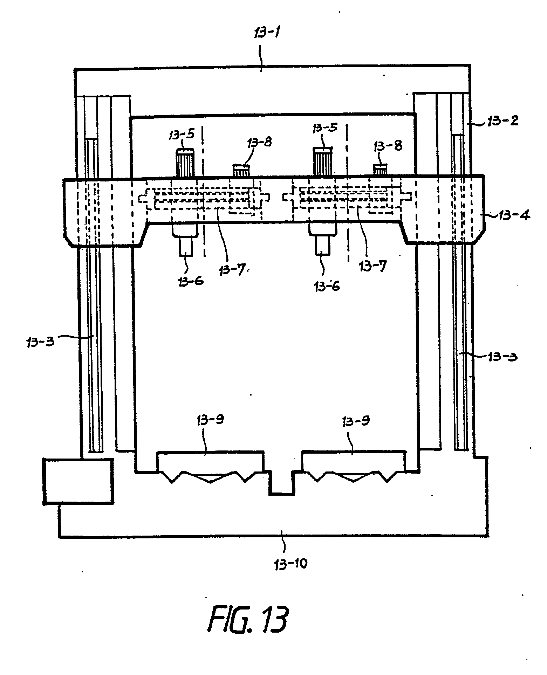

Fig. 13 shows a rotary driven lateral girder in the main lateral girder.

13-1 Top of the dragon gate

13-2 The column of the dragon gate.

13-3 The driving guide screw for the ring-shaped lateral girder moving up and down.

13-4 Ring-shaped lateral girder.

13-5 Mandrel driving motor.

13-6 Tool post.

13-7 The rotary driven lateral girder.

13-8 The driving motor of the rotary lateral.

13-9 Working table.

13-10 Lathe table.

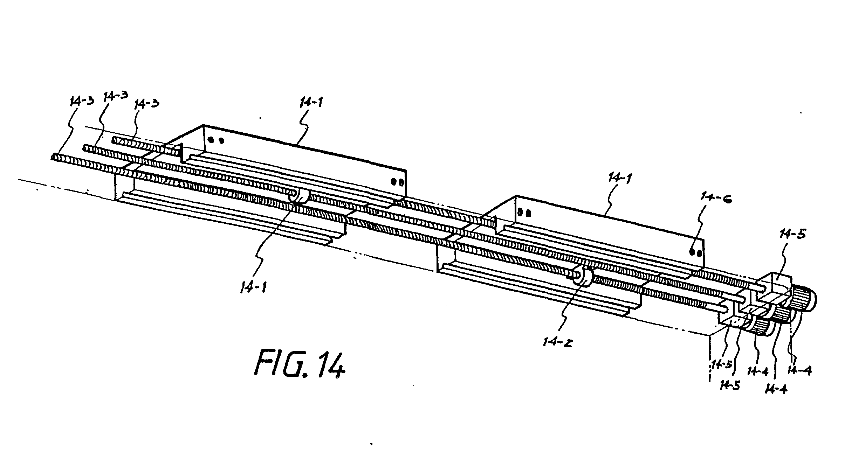

Fig. 14 shows a multi-section working table being driven with a guide screw.

14-1 Working table.

14-2 The driving nut of the working table.

14-3 Driving guide screw of working table.

14-4 Driving motor.

14-5 Transmission case.

14-6 The fixing hole in interlocked driving operation.

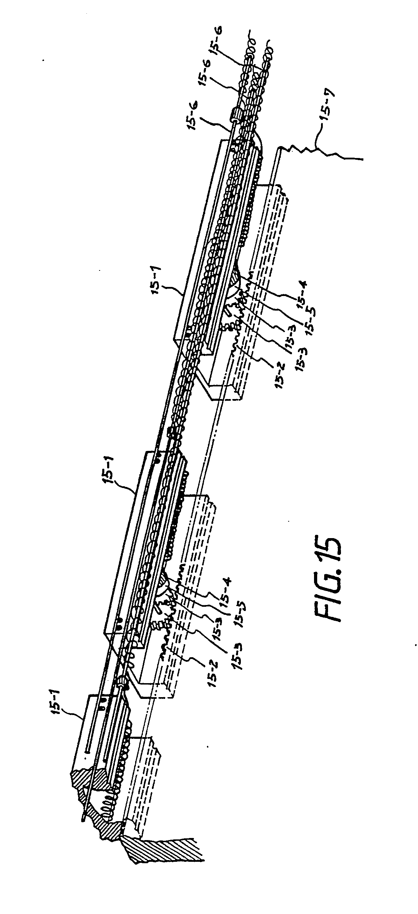

Fig. 15 shows a multi-section working table being driven with a motor installed at the working table base.

15-1 Working table.

15-2 The rack gear being fixed on the lathe table.

15-3 Transmission gear.

15-4 The driving motor installed inside the working table.

15-5 Transmission case.

15-6 Movable lead.

15-7 Lathe bed.

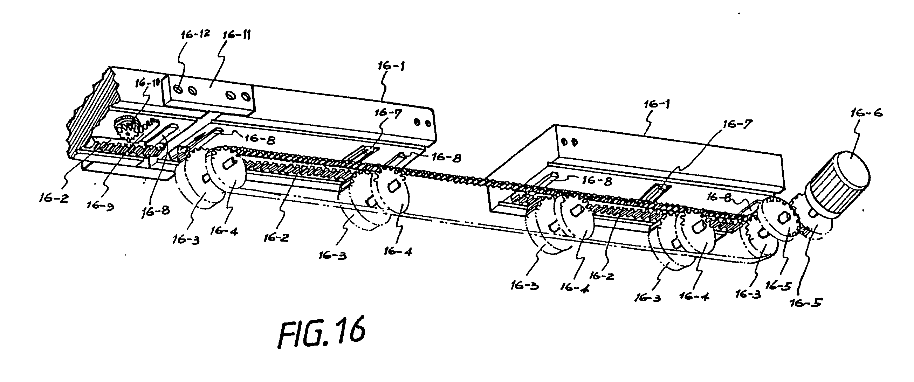

Fig. 16 shows a multi-section working table being driven by row-arranged gears and a lateral displacement clutch gear rack.

16-1 Working table.

16-2 Working table driving gear rack.

16-3 Working table driving gear.

16-4 The sprockets being driven with one motor.

16-5 Transmission gear.

16-6 Driving motor.

16-7 The working table driving gear rack being driven for lateral displacement by a hydraulic or pneumatic means.

16-8 The lateral sliding channel of the working table driving gear rack.

16-9 The lateral displacement auxiliary gear rack of the working table driving gear rack.

16-10 The lateral displacement auxiliary gear of the working table driving gear.

16-11 The interlocking means of working table.

16-12 The fixing hole of the interlocking means of working table.

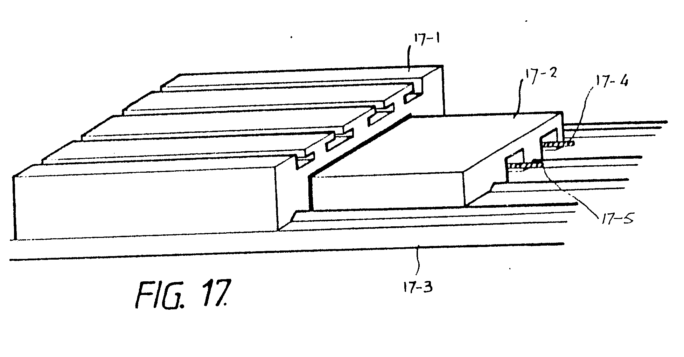

Fig. 17 shows the linear type of shrapnel (or nest) working table.

17-1 The main working table.

17-2 Small working table.

17-3 Lathe bed.

17-4 The driving guide screw of small working table.

17-5 The driving guide screw of main working table.

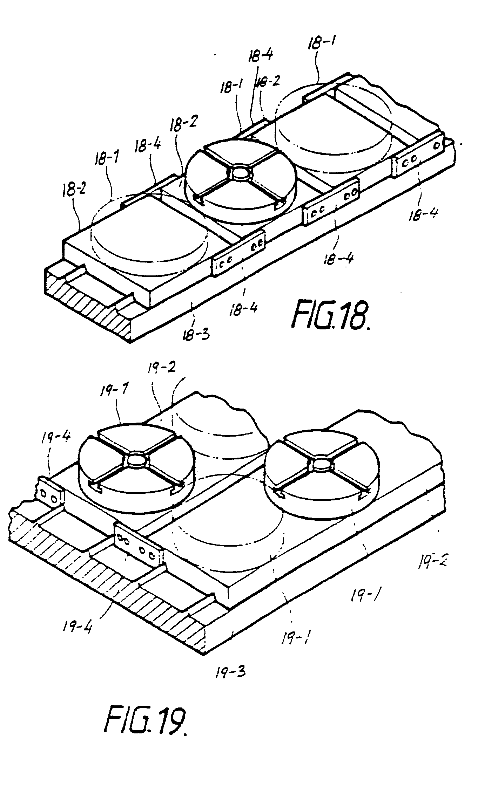

Fig. 18 shows the base of rotary working table set able to be interlocked and to be put on one lathe bed for driving together.

18-1 Rotary working table.

18-2 The base of rotary working table.

18-3 Lathe bed.

18-4 Base locking means.

Fig. 19 shows the bases of the multi-column rotary working table set able to be interlocked and to be put on one lathe bed for driving together.

19-1 Rotary working table.

19-2 The base of rotary working table.

19-3 Lathe bed.

19-4 Base locking means.

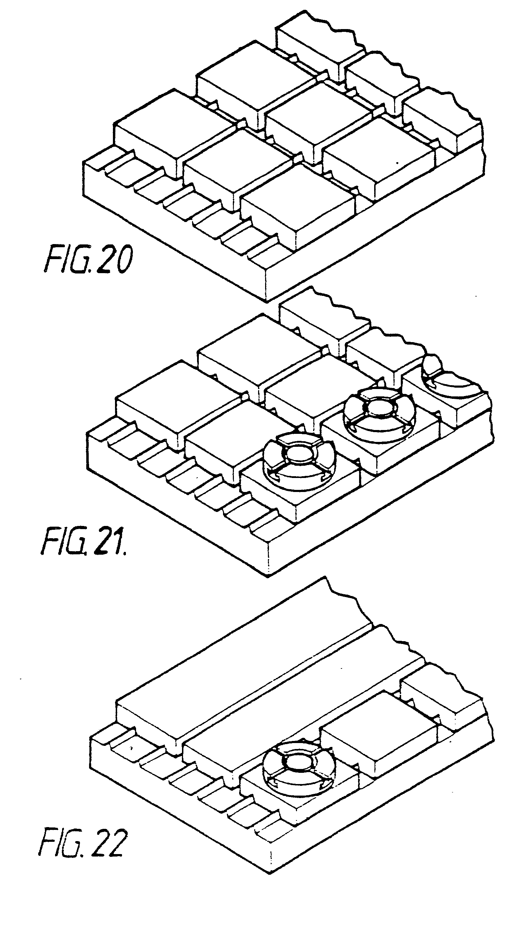

Fig. 20 shows a multi-column and multi-section working table set system.

Fig. 21 shows the embodiment-A of a hybrid operation of the multi-column and multi-section working table sets and the ring-shaped or rotary working tables.

Fig. 22 shows the embodiment-B of a hybrid operation of the multi-column and multi-section working table sets and the ring-shaped or rotary working tables.

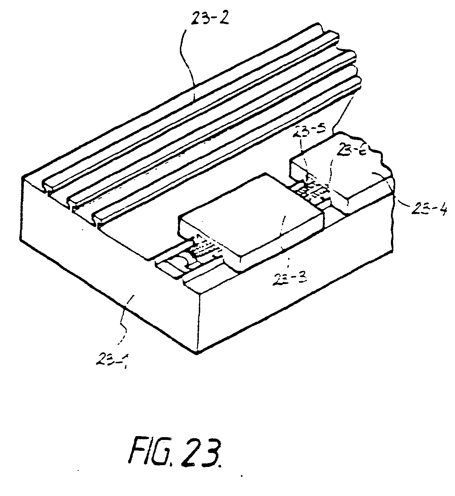

Fig. 23 shows the hybrid operation of the driving working tables and the fixed working tables.

23-1 Lathe bed.

23-2 Fixed type of working table.

23-3 The driving working table.

23-4 The driving working table.

23-5 The driving guide screw of working table.

23-6 The driving guide screw of working table.

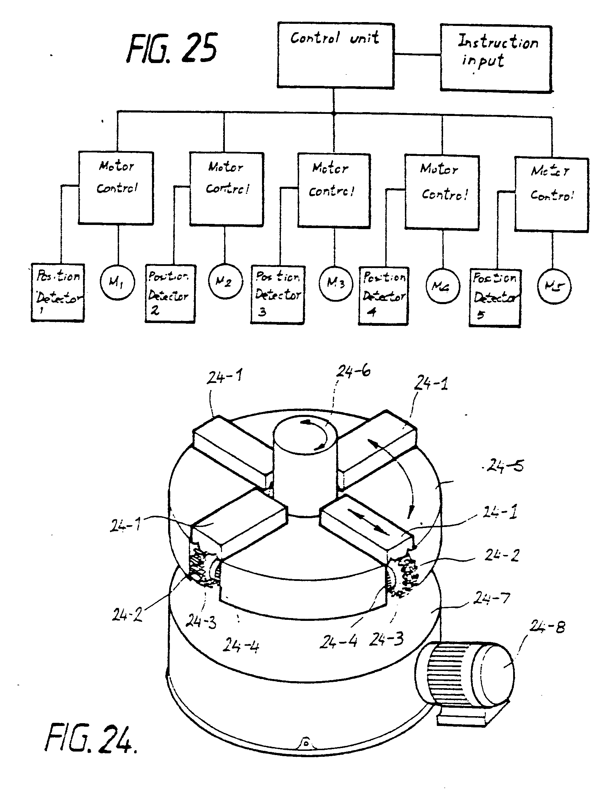

Fig. 24 shows the structure of working table exchanging station.

24-1 Working table.

24-2 Conveyor belt.

24-3 Driving wheel.

24-4 Driving motor.

24-5 Rotary table.

24-6 Center rod.

24-7 The base of rotary table.

24-8 The driving motor of rotary table.

Fig. 25 shows a control system diagram of Fig. 24.

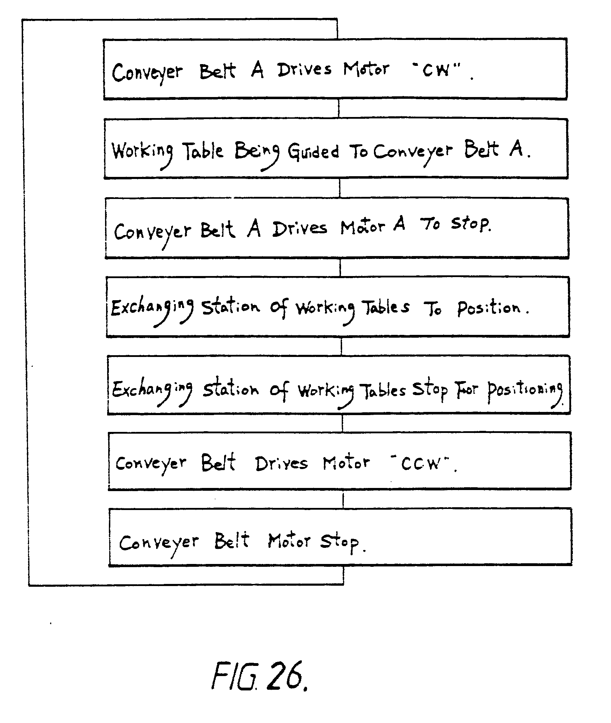

Fig. 26 shows the flow chart of the exchanging station of working table.

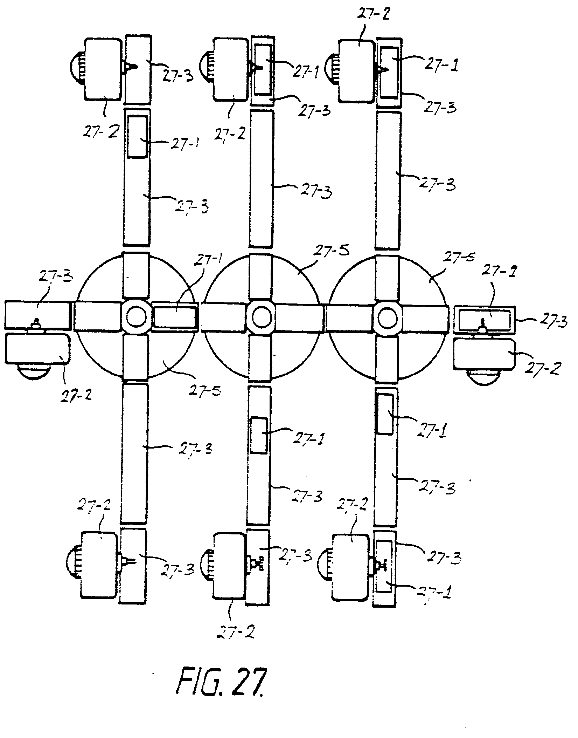

Fig. 27 shows the matrix type of embodiment of the multi-set working table exchanging station.

27-1 Working table.

27-2 The lathe bed type of processing machine body and the tool mandrel.

27-3 The lathe bed of the lathe bed type of processing machine.

27-4 The conveyor belt of working table.

27-5 The exchanging station of working table.

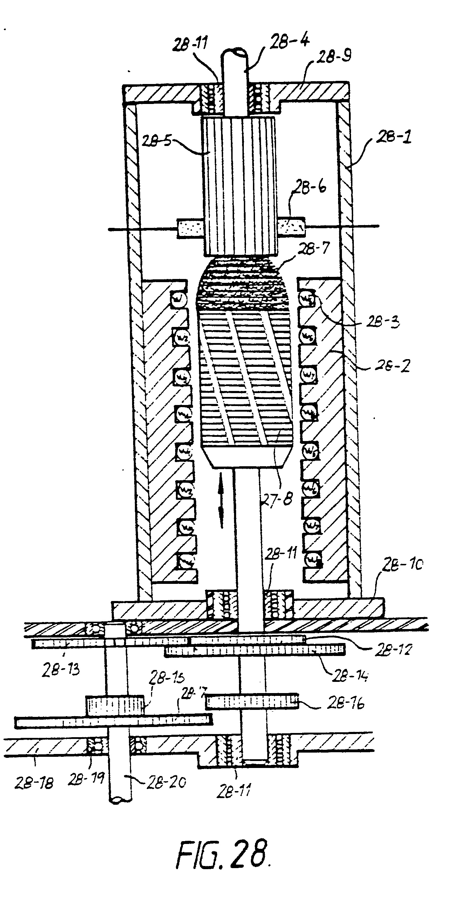

Fig. 28 shows a gear transmission means driven by an axial displacement D.C. motor.

28-1 Outer case.

28-2 The core of magnetic field.

28-3 Field winding.

28-4 Armature axle.

28-5 Commutators.

28-6 Brush.

28-7 Armature winding.

28-8 Armature iron core.

28-9 The rear cover of motor.

28-10 The front cover of motor.

28-11 Radial bearing.

28-12 Mid-speed driving gear.

28-13 Mid-speed output gear.

28-14 High-speed driving gear.

28-15 High-speed output gear.

28-16 Low-speed driving gear.

28-17 Low-speed output gear.

28-18 The lid of output end.

28-19 Output bearing.

28-20 Output axle.

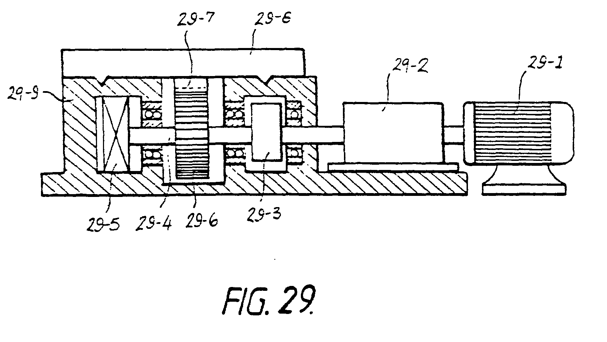

Fig. 29 shows a high frequency response brake means having flexible transmission means.

29-1 Driving motor.

29-2 Transmission system.

29-3 Flexible transmission means.

29-4 The output axle of flexible transmission means.

29-5 Brake means.

29-6 Driving gear.

29-7 Gear rack.

29-8 Working table.

29-9 Lathe bed.

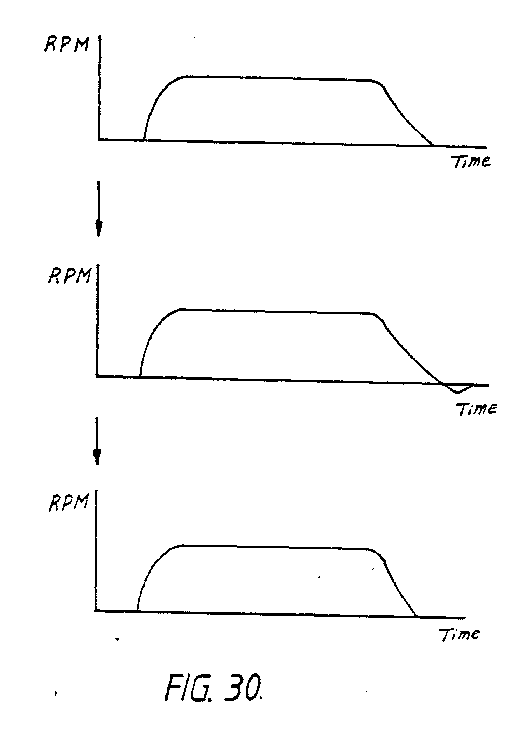

Fig. 30 shows the operation characteristics of a high frequency response brake means having flexible transmission means.

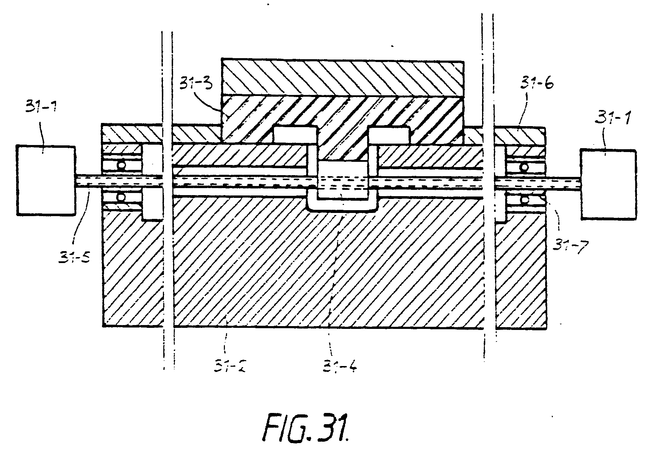

Fig. 31 shows a working table being driven with both ends of a guide screw.

31-1 Driving motor.

31-2 Lathe bed.

31-3 Working piece.

31-4 Driving nut.

31-5 Driving screw of working table.

31-6 The upper protection lid.

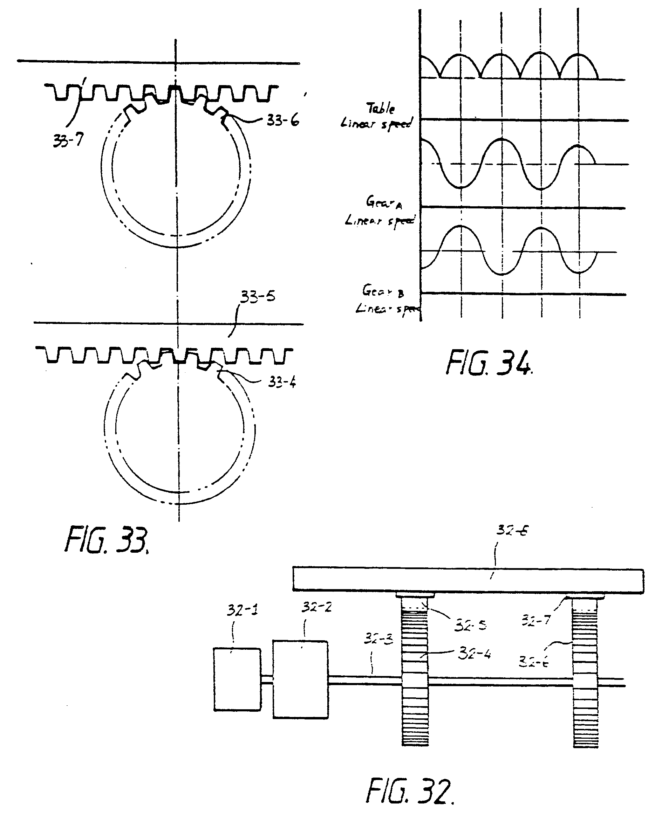

Fig. 32 shows the structure of the phase difference type of driving gear assembly which has a low vibration ratio.

32-1 Driving motor.

32-2 Gear box.
32-3 Transmission shaft.
32-4 Driving gear.
32-5 Gear rack.
32-6 Driving gear.
32-7 Gear rack.
32-8 Working table.

Fig. 33 shows the phase difference upon the gear and the gear rack being engaged each other.

33-4 Driving gear.
33-5 Gear rack.
33-6 Driving gear.
33-7 Gear rack.

Fig. 34 shows the pulse ratio upon the phase difference type and the driving type being combined together.

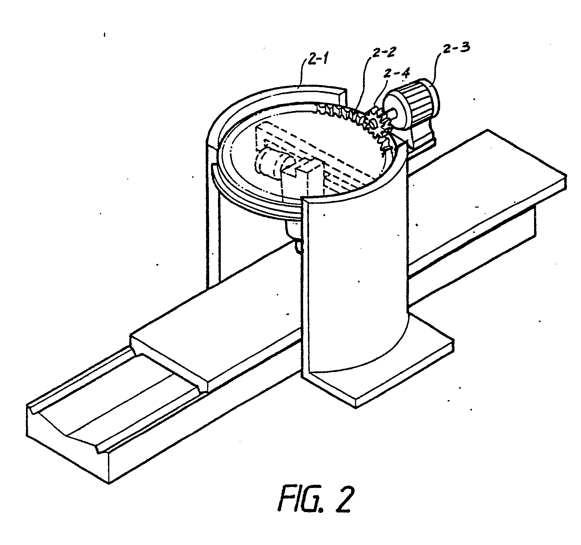

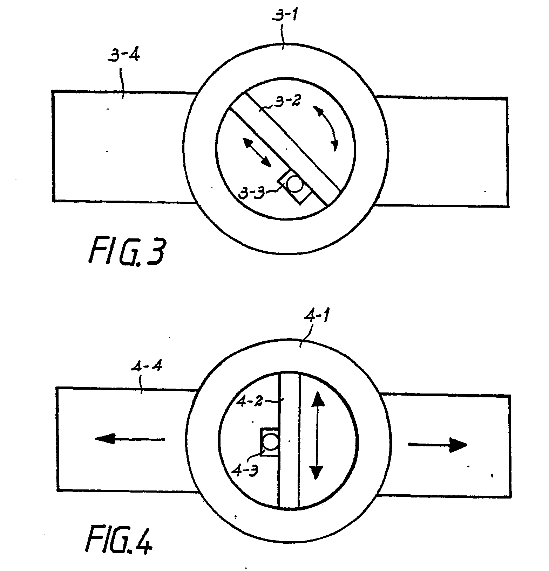

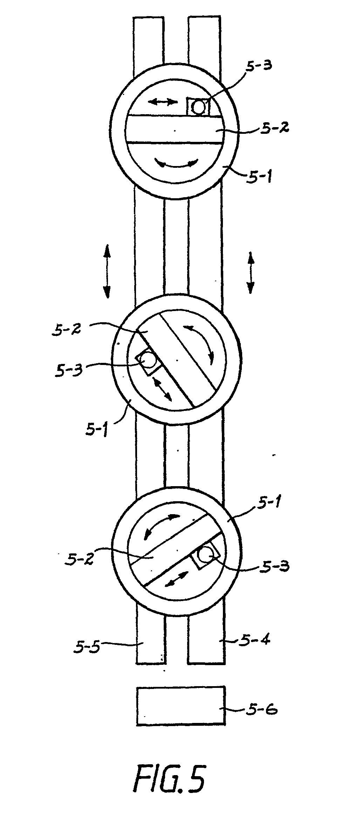

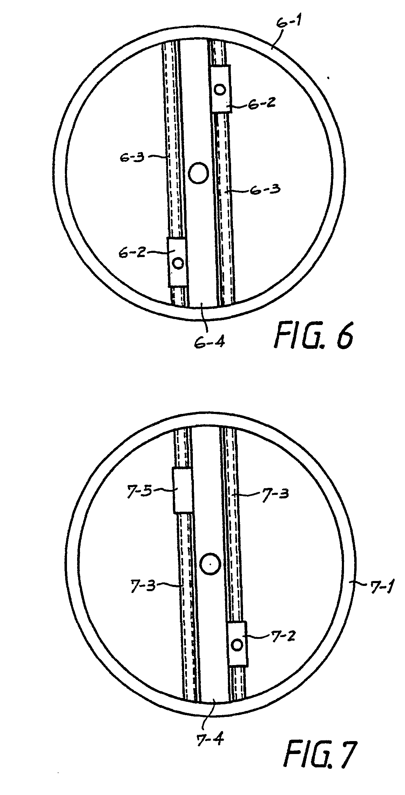

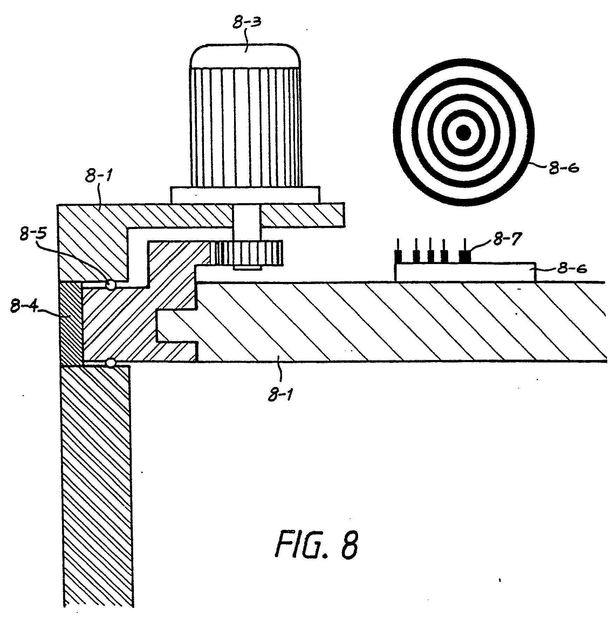

1) The dragon-gate lateral girder in the conventional lathe is usually coupled to the column of the dragon-gate for furnishing the tool post so as to perform planing or milling processing. In this invention, a rotary lateral girder (1-2) has been designed and is to be coupled to the dragon-gate top (1-1), as shown in Fig. 1. In addition to one or more sets of ring-shaped supporting structures (1-4), the rotary lateral girder and the outer supporting and slide surface may be partial circle (2-1) or a fulcrum structure as shown in Fig. 2. The multi-ring structure being used for lathe and planing processing is shown in Fig. 3 and Fig. 5. The slide surface of said lateral girder may use a bearing, air film, or oil film as a sliding medium so as to minimize friction. In addition, a known mechanical or hydraulic lock method may be provided so as to lock-up the said rotary lateral girder (1-2), if necessary, to perform lathe cutting, milling, planing grinding, drilling and boring on a work piece. The said rotary lateral girder (6-4) may be provided with a symmetrical and synchronous balance tool post (6-2) (shown in Fig. 6) or a synchronous and symmetrical balance block (7-5) (shown in Fig. 7) so as to balance the said rotary lateral girder (7-4) upon being used for lathe cutting, the center tool post (7-2) deviates from the center to cause an imbalance effect. The said synchronous and manually locked in position, or by means of a transmission method (such as guide screw (7-3)) which is driven in the opposite direction to the said lateral girder (7-4) so as to obtain a balanced effect at any time, and the same balance tool post (7-2). The said rotary lateral girder (8-2) may be driven with either an external driving motor as shown in Fig. 8 or with a motor (8-3) for the girder itself. The power supply for the girder motor (8-3), the tool post laterally feeding motor, and the mandrel motor may be introduced with a disk or a slip-ring (8-6) and a corresponding brush (8-7).

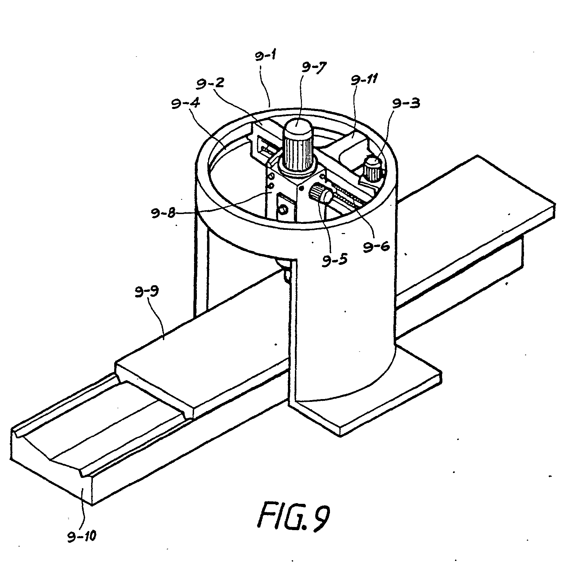

On the aforesaid structure, one or more sets of auxiliary arms (9-11) may be provided; one end of the said auxiliary arm (9-11) is connected to the said lateral girder (9-2) at a selected angle, while the other end is coupled to the guide rail to strengthen the structure and maintain the precision (as shown in Fig. 9). On the said auxiliary arm (9-11), an individually or simultaneously operating tool post may be furnished to perform milling, planing grinding, or polishing for a work piece (especially on the same work piece). The operation of the tool post (9-8) may be accomplished by manual operation or well-known methods such as the guide screw (9-6). When the rotary lateral girder (9-2) is being used as a vertical lathe, the lateral tool feeding motor (9-5) on the lateral girder will feed the tool, and at the same time, the said lateral girder (9-2) is locked up at given direction so as to have the tool on the mandrel tool post (9-8) performing planing milling, grinding and boring processing. The said rotary lateral girder may also be installed on the dragon-gate (10-1) column (10-2) (as shown in Fig. 10) so as to perform processing work on the side of working piece. Further, the said dragon-gate structure may also be furnished with a conventional dragon-gate or multi-dragon gates so as to perform a series of tool feeding processing on a work piece moving reciprocatingly as shown in Fig. 11.

The aforesaid ring-shaped lateral girder (12-6) may be installed on the main lateral girder of a conventional dragon-gate type lathe as shown in Fig. 12, and 13.

2) Another feature of said tunnel type or dragon-gate type of mechanical processing system is the novel design in the working table which will offer more conveniences for processing, and eliminate some of dead angles in terms of processing direction further details are described as follows:

a) The working table may be driven singly, or simultaneously in synchronous or asynchronous in longitudinal direction with divided sections; the difference from the conventional working table is that it may, if necessary, be connected in series with a plurality of sections which may be similar in size and height, each working table is driven with a separate motor, or all said working tables are driven with one motor as shown in Fig. 14 thru 16.

b) A shrapnel type working table as shown in Fig. 17 is a structure in which one or more than one set of small working tables (17-2) are provided underneath a main working table (17-1), being driven to the same direction as that of said main working table (17-1). Said small working table (17-2) may have the same length as that of the main working table (17-1) or may not, or may be made in section structure as mentioned in "(a)" above so as to increase the processing result. Said main or small working table may have a separate driving means.

3) A rotary working table:

In addition to the linearly reciprocating type working table of the aforesaid tunnel type or dragon-gate type of mechanical processing system mentioned in "2)" above, a circle type, ring type, or other selected shapes or rotary working table also be designed.

Fig. 18 shows a well known rotary working table (18-1), of which the fixing base (18-2) is attached to the lathe bed (18-3) by using inter-connecting or mechanical interlocking means (18-4), and may be driven as well. Therefore, it not only can be rotated, but also can be separated in longitudinal directions as mentioned in (a) of 2) above; it can also be arranged in multi-row manner to expand the processing functions as shown in Fig. 19.

4) The mixed working table with linearly moving and rotary moving working tables has a structure shown in Fig. 20 thru 22, of which the feature is that said two types of working tables may appropriately be used, and each type has its own separate driving motor so as to make suitable selection processing.

5) A major element working table group and an exchangeable working table group structure formed by means of the aforesaid various types; the features are as follows:

a) The linearly moving working table group: It comprises a multi-row and multi-section working tables having equal or un-equal length, width, height, and having a same level surface or a slanting angle or are each other in any suitable geometric shapes, the said working tables may be driven separately or in synchronous coupling manner. It may comprise some driving working tables and some working tables that may not be driven (the fixed type) as shown in Fig. 23.

b) The rotary working table group: It comprises a multi-set of rotary working tables with selected diameter, height, and related mechanical positions, or the ring-shaped working table; on said tables, a selected and fixed tool is provided respectively so as to process the working piece.

c) A mixed working table group comprises the type of working tables described in (a) and (b) above.

D) A continuous and circulated working table group: It comprises the working tables mentioned in (a), (b), (c) of 2) above which are driven in a given sequence to have a continuous displacement along the guide rail on a base for processing the working piece. Said working table moves from one lathe bed to another lathe bed by means of an auxiliary rail. The structure and operation of said design in this invention are described in detail as follows:

A working table group having working table exchanging station: In addition to the displacement circulating method by means of the rail in said processing system, the working tables may be exchanged thru the exchanging station as shown in Fig. 24, and the flow chart of the exchanging action is shown in Fig. 25—26, Fig. 27 shows an exchanging station for a multi-set type of working table, and it is designed in matrix type.

6) The aforesaid various kinds of working tables may be applied to the novel combinations as follows:

a) They may be used by combining with the various kinds of dragon-gate and lateral girder structures mentioned in "1)" above.

b) The working table mentioned in "2)" above may, in part or completely, be installed at the outer side of the dragon-gate.

c) Upon being used in the working table sets of the various dragon-gate mentioned in "1)" above, they may if necessary, be placed in the space at the lower portion of the dragon-gate, or try to reserve some space for the working piece.

d) Each of said working tables is provided with driving motor or other driving element; part of said working tables may, if necessary, be without driving means, but being either movable or non-movable.

e) A selected one or more than set of said working tables may be provided with driving means to drag the rest working tables by means mechanical interlocking means or working piece.

f) The means and methods mentioned in (c) thru (e) above may also be used for lathe without dragon-gate structure; the processing work may be done each other by means of a working table group manner.

7) Spindle driving system:

Owing to the repeated starting and stop operation, the requirements on starting efficiency, energy saving, and the brake means to stop the spindle have become more important. In addition to the known brake means, such as the A.C. motor, electric or hydraulic means, a new spindle motor brake means has been developed as shown in Fig. 28, which shows a D.C. motor. The feature of said D.C. motor is that the field iron core (28-2) is thicker than that of the armature (28-8), and the field windings (28-3) are axial overlapped multi-windings, of which each may be provided with exciting control. The motor bearing (28-11) is an axial bearing which has the features of axial displacement and rotation. Since the length at the both ends of said motor shaft is suitably designed, the variation of exciting current applied to the axial overlapped field windings will cause the armature to make a corresponding axial displacement, which will generate the following functions:

a) Tool feeding during rotating, such as, for drilling or milling, etc.

b) Reciprocating motion during rotating, such as for boring or processing the rivet head.

c) To have the gear assembly mounted on said shaft generating a displacement so as to change the corresponding engaged gears to vary the output speed ratio; further, it may make a micro or intermittent drive with a D.C. motor so as to prevent the gears from colliding with each other.

d) To obtain clutch or brake function by means of the axial thrust to push a friction piece.

e) To generate an axial vibration effect by means of controlling the current applied to the field winding and exciting winding for removing the small metal wastes and reducing the cutting resistance.

8) A high frequency response brake method with flexible transmission means:

It is used for alleviating the peak inertia value during starting and braking so as to provide a higher frequency response braking function. It mainly comprises: (shown in Fig. 29).

29-1 Driving motor.

29-2 The transmission system.

29-3 The flexible transmission means, which may be a well-known flexible transmission structure, such as mechanical flexibility, or fluid compression flexibility, etc.

29-4 The output shaft of the flexible transmission means.

29-5 The brake means, which may be a hydraulic, pneumatic, or electro-magnetic driving means to couple to the output end of the flexible transmission means mentioned in (29-3) above.

29-6 The driving gear.

29-7 The rack gear coupled to the working table.

29-8 The working table.

The functions and the features of said device are as follows:

(a) Starting functions: The driving function is started with the drive motor (29-1) thru the transmission means (29-2) and the flexible transmission means (29-3); at that moment, said flexible transmission means (29-3) will apply gradual accelerative torque to its load so as to have a moderate starting.

(b) The function of high frequency response brake: When wanting to stop the system during its running, cut off the power supply of motor (29-1) and simultaneously drive the brake means (29-5); now, in the total inertia force received by the brake means (29-5) at that instant, the portion received by the rotor of motor and the transmission means will have a little delay because of the flexible effect; thus, the peak inertia force of the system received by the brake means at that instant will be alleviated; and the brake means will slide so as to have shorter braking time as shown in Fig. 30.

9) A dual-end driving working table or other mechanical structure; the object of this design is to minimize the phenomena of bending and deformation of the guide screw (31-5), and the flexure and deformation in conventional machine system. The feature of its structure is that two driving motors (31-1) are installed at the both ends of the driving guide screw (31-5) of working table (31-3) to drive the working table (31-3) simultaneously. The thrust applied to the driving nut (31-4) of working table (31-3) is from the both ends of the guide screw instead from a signal end as that of the conventional transmission method: therefore, when a similar load being applied, the guide screw of this design will only be loaded with one-half torque as that of the conventional signal end driving method. Consequently, the bending and deformation and the mechanical flexure and deformation will be minimized as shown in Fig. 31.

Another embodiment of this design is to use a single motor and specific transmission means to drive the both ends of the guide screw simultaneously for driving the working table so as to obtain the aforesaid function.

10. A driving gear assembly having low vibration ratio by means of phase difference: It is used for minimizing a vibration phenomenon generated by the combined tunnel type or dragon-gate type of processing system, and the general big tool machine during their working tables being driven as a result of backlash or the distortion of involute of the transmission elements. Fig. 32 shows the embodiment of said gear assembly (32-4), (32-6), in which two or more than two sets of coaxial gear assemblies are engaged with the rack (32-5), (32-7) in a given phase difference as shown in Fig. 33. When driving the working table (32-8), a synthetic pulse drive with a lower vibration ratio may be obtained as shown in Fig. 34.

Summing up the aforesaid descriptions, it may be seen that this invention is to have many novel means combined together to form a multi-function mechanical processing system that may be designed and manufactured on a basis of standard specifications and simplicity. Particularly, a series of new designs, such as, the energy-saving working table, the ATC system of the common tool chest, and the common-use dragon-gate main mechanism assembled with functional elements will use a minimum number of assemblies to provide multi-functions, such as lathing, drilling, planing milling, grinding and boring. This invention has eliminated the drawbacks and broken thru the limits of the known universal machines that have low efficiency and single use nature. Moreover, the described mechanical processing system may be handled with the standard management method by means of management software.

Reference may also be made to the following applications which have been divided out of the present application and which describe and claim related subject matter.

EP—A—0205988
EP—A—0208123
EP—A—0208124
EP—A—0207298
EP—A—0205989
EP—A—0208125
EP—A—0255736
EP—A—0251350

**Claims**

1. A multi-function machine tool comprising at least one work table (1-9) movable along horizontal tracks (1-10), and support means spanning the tracks and including a circular or part-circular guideway (1-4), a girder (1-2), rotatable with respect to the guideway about the guideway axis, and a tool post (1-8) movable along the girder.

2. A multi-function machine tool according to Claim 1 in which the circular or part-circular guideway (12-6) can be raised or lowered.

3. A multi-function machine tool according to Claim 1 having a said guideway (10-2) disposed horizontally for machining the top of a workpiece and a further said guideway (10-2) disposed vertically for machining a lateral surface of the workpiece.

4. A multi-function machine tool according to any preceding claim in which the girder engages the guideway at its two ends and is provided with a transverse supporting member (9-11) engaging the guideway at a third point.

5. A multi-function machine tool according to any of claims 1—3 in which the girder is mounted on a circular supporting structure rotatable in the guideway (2-1) and provided with teeth (2-2) for engaging a driving pinion.

6. A multi-function machine tool according to any of claims 1 to 3 in which the girder (6-4, 7-4) carries in addition to the tool post (6-2, 7-2) either a second tool post (6-2) or a counterbalance (7-5) arranged always to occupy a corresponding position on the opposite face of the girder.

7. A multi-function machine tool according to any preceding claim in which a plurality of work-tables (15-1) are arranged to move along the tracks.

8. A multi-function machine tool according to Claim 7 in which one of the work tables (17-2) is arranged to nest wholly or partly within another (17-1).

9. A multi-function machine tool according to any preceding claim in which at least one worktable has a rotatable platform (19-1) for the workpiece.

10. A multi-function machine tool according to any preceding claim in which the drive to the worktable is through a shaft (29-4) coupled to an electric motor (29-1) through a flexible transmission (29-2, 29-3) the shaft being coupled directly to a brake (29-5) on the opposite side to the motor.

11. A multi-function machine tool according to any preceding claim in which a worktable (32-8) is driven by a pair of racks (32-5, 32-7) respectively engaging pinions (32-4, 32-6), the rack and pinions drives being offset from one another by half a tooth width.

12. A machining system comprising a plurality of work stations each comprising a multi-function machine tool according to any of claims 1—6 positioned along a common set of tracks.

## Patentansprüche

1. Multifunktions-Werkzeugmaschine mit mindestens einem, entlang horizontalen Spuren (1-10) bewegbaren Arbeitstisch (1-9) und einer die Spuren (1-10) überspannenden Trageinrichtung mit einer kreis- oder kreisabschnittsförmigen Führungsbahn (1-4), einem bezüglich der Führungsbahn um deren Achse drehbaren Träger und einem entlang des Trägers bewegbaren Werkzeughalter.

2. Multifunktions-Werkzeugmaschine nach Anspruch 1, bei der die kreis- oder kreisabschnittsförmige Führungsbahn (12-6) gehoben oder gesenkt werden kann.

3. Multifunktions-Werkzeugmaschine nach Anspruch 1, mit einer horizontal angeordneten Führungsbahn (10-2) der besagten Art für die Bearbeitung der Oberseite eines Werkstücks und einer weiteren, vertikal angeordneten Führungsbahn (10-2) der besagten Art für die Bearbeitung einer Seitenfläche des Werkstücks.

4. Multifunktions-Werkzeugmaschine nach einem der vorhergehenden Ansprüche, bei der der Träger an seinen beiden Enden in die Führungsbahn eingreift und mit einer Querstütze (9-11) versehen ist, die in die Führungsbahn an einem dritten Punkt eingreift.

5. Multifunktions-Werkzeugmaschine nach einem der Ansprüche 1 bis 3, bei der der Träger auf eine kreisförmige, in der Führungsbahn (2-1) drehbare Tragvorrichtung montiert und mit Zähnen (2-2) für den Eingriff in ein Antriebszahnrad versehen ist.

6. Multifunktions-Werkzeugmaschine nach einem der Ansprüche 1 bis 3, bei der der Träger (6-4, 7-4) zusätzlich zum Werkzeughalter (6-2, 7-2) entweder einen zweiten Werkzeughalter (6-2) oder ein Gegengewicht (7-5) trägt, das derart angeordnet ist, daß es stets eine entsprechende Lage an der entgegengesetzten Seite des Trägers einnimmt.

7. Multifunktions-Werkzeugmaschine nach einem der vorhergehenden Ansprüche, bei der eine Mehrzahl von Arbeitstischen (15-1) dazu ausgebildet ist, sich entlang der Spuren zu bewegen.

8. Multifunktions-Werkzeugmaschine nach Anspruch 7, bei der einer (17-2) der Arbeitstische derart ausgebildet ist, daß er ganz oder teilweise in einen anderen Arbeitstisch (17-1) eingefügt werden kann.

9. Multifunktions-Werkzeugmaschine nach einem der vorhergehenden Ansprüche, bei der mindestens ein Arbeitstisch eine drehbare Plattform (19-1) für das Werkstück aufweist.

10. Multifunktions-Werkzeugmaschine nach einem der vorhergehenden Ansprüche, bei der Arbeitstisch-Vorschub durch eine Welle (29-4) erfolgt, die über eine elastische Transmission (29-2, 29-3) an einen elektrischen Motor (29-1) gekuppelt ist, wobei die Welle an der dem Motor entgegengesetzten Seite direkt an eine Bremse (29-5) gekuppelt ist.

11. Multifunktions-Werkzeugmaschine nach einem der vorhergehenden Ansprüche, bei der ein Arbeitstisch (32-8) durch ein Paar von Zahnstangen (32-5, 32-7) angetrieben ist, die jeweils in ein Zahnrad (32-4, 32-6) eingreifen, wobei die beiden Zahnstange/Zahnrad-Antriebe gegeneinander um eine halbe Zahnteilung versetzt sind.

12. Bearbeitungssystem mit einer Mehrzahl von Arbeitsstationen, deren jede eine entlang einer gemeinsamen Gruppe von Spuren positionierte Multifunktions-Werkzeugmaschine nach einem der Ansprüche 1 bis 6 umfaßt.

## Revendications

1. Machine-outil à fonctions multiples comprenant au moins une table de fixation (1-9) mobile sur des glissières de guidage (1-10) horizontales, et des moyens de support enjambant les glissières et comprenant une surface de glissage (1-4) circulaire ou partiellement circulaire, une poutre (1-2) rotative autour de l'axe de la surface de glissage, et un porte-outils (1-8) mobile sur la poutre.

2. Machine-outil à fonctions multiples selon la revendication 1, dans laquelle la surface de glissage (12-6) circulaire ou partiellement circulaire peut être abaissée ou relevée.

3. Machine-outil à fonctions multiples selon la revendication 1, ayant une dite surface de glissage (10-2) disposée horizontalement pour travailler le dessus d'une pièce à usiner et une autre dite surface de glissage (10-2) disposée verticalement pour travailler une surface latérale de la pièce à usiner.

4. Machine-outil à fonctions multiples selon l'une quelconque des revendications précédentes, dans laquelle la poutre s'engage dans la surface de glissage à ses deux extrémités et possède un élément de support transversal (9-11) s'engageant dans la surface de glissage à un troisième point.

5. Machine-outil à fonctions multiples selon l'une quelconque des revendications 1 à 3, dans laquelle la poutre est montée sur une structure de support circulaire rotative dans la surface de glissage (2-1) et munie de dents (2-2) destinées à entrer en prise avec un pignon d'entraînement.

6. Machine-outil à fonctions multiples selon l'une quelconque des revendications 1 à 3, dans laquelle la poutre (6-4, 7-4) porte, outre le porte-outils (6-2, 7-2), soit un second porte-outils (6-2), soit un contrepoids (7-5) disposé de manière à toujours occuper une position correspondante sur la face opposée de la poutre.

7. Machine-outil à fonctions multiples selon l'une quelconque des revendications précédentes, dans laquelle une pluralité de tables de fixation (15-1) sont disposées de manière à se déplacer sur les glissières de guidage.

8. Machine-outil à fonctions multiples selon la revendication 7, dans laquelle une des tables de fixation (17-2) est disposée pour venir s'emboîter totalement ou partiellement dans une autre table de fixation (17-1).

9. Machine-outil à fonctions multiples selon l'une quelconque des revendications précédentes, dans laquelle au moins une table de fixation possède une plate-forme rotative (19-1) destinée à la pièce à usiner.

10. Machine-outil à fonctions multiples selon l'une quelconque des revendications précédentes, dans laquelle l'entraînement de la table de fixation se fait par un arbre (29-4) couplé à moteur électrique (29-1) par une transmission flexible (29-2, 29-3), l'arbre étant couplé directement à un frein (29-5) sur le côté opposé au moteur.

11. Machine-outil à fonctions multiples selon l'une quelconque des revendications précédentes, dans laquelle une table de fixation (32-8) est entraînée par une paire de crémaillères (32-5, 32-7) respectivement en prise avec des pignons (32-4, 32-6) les entraînements des crémaillères et des pignons étant décalés les uns des autres de la largeur d'une demi-dent.

12. Procédé de façonnage comprenant une pluralité de postes de travail comprenant chacun une machine-outil à fonctions multiples selon l'une quelconque des revendications 1 à 6, positionnées sur un jeu commun de crémaillères.

FIG.1

FIG. 2

FIG.3

FIG.4

FIG.5

FIG. 6

FIG. 7

FIG. 8

FIG.9

10-1

10-2

10-2

10-2

FIG.10

FIG. 11

FIG.12

FIG. 13

FIG. 14

FIG.15

FIG.16

14

FIG. 17.

FIG.18.

FIG.19.

*FIG.20*

*FIG. 21.*

*FIG. 22*

23-2

23-5

23-6

23-4

23-3

23-1

FIG. 23.

## FIG. 25

## FIG. 24.

| |
|---|
| Conveyer Belt A Drives Motor "CW". |
| Working Table Being Guided To Conveyer Belt A. |
| Conveyer Belt A Drives Motor A To Stop. |
| Exchanging Station Of Working Tables To Position. |
| Exchanging Station Of Working Tables Stop For Positioning. |
| Conveyer Belt Drives Motor "CCW". |
| Conveyer Belt Motor Stop. |

FIG. 26.

FIG. 27.

*FIG. 28.*

FIG. 29.

FIG. 30.

FIG. 31.

FIG. 33.

Table
Linear speed

Gear A
Linear speed

Gear B
Linear speed

FIG. 34.

FIG. 32.